# EUROPÄISCHE PATENTSCHRIFT

(11) **EP 2 437 615 B1**
(45) Veröffentlichungstag und Bekanntmachung des Hinweises auf die Patenterteilung: **18.02.2015**
(21) Anmeldenummer: 10722544.3
(22) Anmeldetag: 12.04.2010
(51) Int. Cl.: A23D 7/00, A23J 3/22, A23L 1/22, A23L 1/30, A23L 1/314, A23L 1/317

(54) **EMULSION ODER GEL ZUR HERSTELLUNG VON OMEGA-3-FETTSÄURE-HALTIGEN NAHRUNGSMITTELN**
EMULSION OR GEL FOR THE PRODUCTION OF FOOD CONTAINING OMEGA-3 FATTY ACID
ÉMULSION OU GEL DESTINÉS À LA PRODUCTION DE PRODUITS ALIMENTAIRES CONTENANT DES ACIDES GRAS OMÉGA 3

(30) Priorität: 02.06.2009 DE 102009023482
(43) Veröffentlichungstag der Anmeldung: 11.04.2012
(73) Patentinhaber: Fraunhofer-Gesellschaft zur Förderung der angewandten Forschung e.V., 80686 München (DE)
(72) Erfinder: EISNER, Peter, 85354 Freising (DE); ZACHERL, Christian, 85354 Freising (DE); NUSKE, Andreas, 78166 Donaueschingen (DE)
(74) Vertreter: Wiedemann, Markus
(86) Internationale Anmeldenummer: PCT/DE2010/000408
(87) Internationale Veröffentlichungsnummer: WO 2010/139291

(56) Entgegenhaltungen:
- US-A- 6 093 425
- US-A1- 2004 151 823
- DATABASE WPI Week 200938 Thomson Scientific, London, GB; AN 2009-J64418 XP2593086 & RU 2 356 233 C1 (UNIV MOSC APPL BIOTECHN) 27. Mai 2009 (2009-05-27)
- DATABASE FSTA [Online] INTERNATIONAL FOOD INFORMATION SERVICE (IFIS), FRANkFURT-MAIN, DE; 2001, NOORT M VAN DE: "Peas as functional ingredients in meat products. (translated)" XP002593087 Database accession no. FS-2002-11-Sa1737 -& NOORT M VAN DE: "Peas as functional ingredients in meat products" VOEDINGSMIDDELENTECHNOLOGIE, KEESING NOORDERVLIET B.V., ZEIST, NL, Bd. 34, Nr. 23, 26. Oktober 2001 (2001-10-26), Seite 27, XP009136647 ISSN: 0042-7934

## Beschreibung

Die vorliegende Erfindung betrifft eine Emulsion oder ein Gels als Zusatz oder Zutat zur Herstellung von Omega-3-Fettsäure-haltigen Nahrungsmitteln, ein Verfahren zur Herstellung dieser Emulsion oder dieses Gels sowie die Verwendung der Emulsion oder des Gels zur Herstellung von Nahrungsmitteln.

Heutzutage haben Nahrungsmittel nicht mehr allein das Ziel, die Nährstoffversorgung des Konsumenten zu sichern. Es geht vielmehr um den Erhalt der Leistungsfähigkeit des Konsumenten und den Schutz seiner Gesundheit vor Schäden, die durch eine allzu hohe Belastungsintensität (beispielsweise Stress und chronische Erkrankungen) hervorgerufen werden. Förderung der Regeneration, Stabilisierung des Immunsystems und Schutz des Herzens sind elementare Aufgaben, die durch eine richtige Ernährung beeinflusst werden können. Deshalb ist die Supplementation oder Anreicherung von Nahrungsmitteln mit natürlichen und nicht synthetischen Nährstoffen wichtig. Nährstoffe wie Omega-3-Fettsäuren, Coenzym QIO, L-Carnitin, Aminosäuren und andere Substanzen gelten hierbei als gesundheitsfördernd. Deshalb werden immer mehr sog. funktionelle Lebensmittel bzw. funktionelle Lebensmittelzusätze hergestellt. Unter diesen funktionellen Lebensmitteln bzw. Lebensmittelzusätzen gewinnen diejenigen vermehrt an Bedeutung, welche Omega-3 Fettsäuren enthalten. Vor allem die in fetten Kaltmeeresfischen (z.B. in Lachs, Makrele, Thunfisch und Hering) enthaltenen Omega-3-Fettsäuren wirken schützend gegen Arteriosklerose, sie unterstützen das Immunsystem und verbessern die geistige Leistungsfähigkeit und Stimmungslage. Außerdem kommen Omega-3-Fettsäuren auch in pflanzlichen Ölen wie Sojaöl, Olivenöl, Sonnenblumenöl, Leinöl oder Rapsöl oder auch in Fischölen und den Ölen und Fetten von Algen vor.

Omega-3-Fettsäuren Docosahexaensäure, im folgenden als DHA abgekürzt, und Eicosapentaensäure, im folgenden als EPA abgekürzt, findet man in ausreichender Menge in Kaltmeerfischen (z.B. in Makrele, Thunfisch, Hering oder Lachs) sowie in Pflanzen in Form von Alpha-Linolsäure (C 18:3). Die Fettsäuren konzentrieren sich bei Kaltmeerfischen im Fettgewebe, insbesondere in den so genannten Fischlocken.

Wie die DE 38 13 805 A beschreibt, werden Fischöle mit Gehalten an EPA und DHA zur Herstellung von EPA- und DHA-haltiger Präparate verwendet, wobei die Fettsäuren als Triglyceride oder als Ester niederer Alkohole vorliegen. Die durch Umesterung mit niederen Alkanolen aus den Triglyceriden erhaltenen Alkylester haben den Vorteil, dass sie besonders gut für die Aufkonzentrierung von EPA und DHA geeignet sind.

Ein Problem bei der Herstellung von EPA- und DHA-haltigen Präparaten ist der Geruch, der auch nach Umesterung und Aufkonzentrierung von EPA und DHA erhalten bleibt. Dieser starke Geruch sowie der starke Fischgeschmack, insbesondere beim Einsatz von Fischölen als Trägersubstanz von EPA- und DHA ist auf den oxidativen Abbau der hochungesättigten Fettsäuren zurückzuführen. Dabei handelt es sich überwiegend um ungesättigte Carbonylverbindungen, die schon bei sehr niedrigen Konzentrationen intensiv riechen können.

Aus den genannten Gründen ist bisher von einem Einsatz eines flüssigen EPA- und DHA-haltigen Fisch- oder Pflanzenöls als Zusatz in Nahrungsmitteln und Produkten langer Haltbarkeit und damit eingehender langer Lagerungsdauer im Verkaufsregal oder beim Konsumenten abgeraten worden. Das bekannte Problem der hohen Oxidationsanfälligkeit von Omega-3-Fettsäuren ergibt sich insbesondere, wenn etwa Wurstwaren mit EPA- und DHA-haltigen Fischölen angereichert werden.

Es ist also in jedem Fall erstrebenswert, die hohe Oxidationsanfälligkeit von mit Omega-3-Fettsäuren angereicherten funktionellen Nahrungsmitteln bereits im Rahmen der Herstellung der Nahrungsmittel zu eliminieren.

Die US 2004/0151823 A1 beschreibt eine Emulsion mit kontinuierlicher Wasserphase, welche Erbsenprotein enthält, weiterhin mehrfach ungesättigte Fettsäuren (PUFA), fettlösliche Antioxidantien und Zitronensäure. Diese Emulsion wird in einer Konsistenz hergestellt, welche sie als Brotaufstrichmittel oder als löffelbares Produkt eignet. In der US 6 093 425 A werden emulsionsartige Soja-Milchprodukte mit Vitamin C und Vitamin E beschrieben. Die RU 2 356 233 C1 offenbart eine wasserbasierte Emulsion mit Palmöl und Erbsenaroma zum Einsatz als Vitaminzugabe in Fleischprodukten für Kinder. Bei allen diesen Vorveröffentlichungen wird daher Omega-3-Fettsäure in Form von Triglyceriden verwendet.

Die Aufgabe der vorliegenden Erfindung besteht demgegenüber darin, ein bekanntes Gel bzw. eine bekannte Emulsion derart weiter zu bilden, dass einerseits eine höhere Konzentration von gesundheitsfördernder Omega-3-Fettsäure bei gleichzeitig hoher Stabilität der Emulsion bzw. des Gels möglich ist. Weiterhin ist ein Verfahren zur Herstellung des Gels bzw. der Emulsion anzugeben sowie eine vorteilhafte Verwendung des Gels bzw. der Emulsion.

### Offenbarung der Erfindung

Der Erfindung liegt der Gedanke zugrunde, eine Emulsion zur Herstellung von Omega-3-Fettsäure-haltigen Nahrungsmitteln zu verwenden, welche folgendes beinhaltet:
a) eine äußere Wasserphase (kontinuierliche Phase), welche wenigstens ein in Wasser gelöstes wasserlösliches Antioxidans enthält;
b) eine innere Fett- oder Ölphase (disperse Phase), welche mit wenigstens einem fett- oder öllöslichen Antioxidans und mit Omega-3-Fettsäureester versehene Öltröpfchen aus Pflanzenöl beinhaltet, wobei die Pflanzenöltröpfchen jeweils von einer Hülle aus Pflanzenprotein umgeben sind.

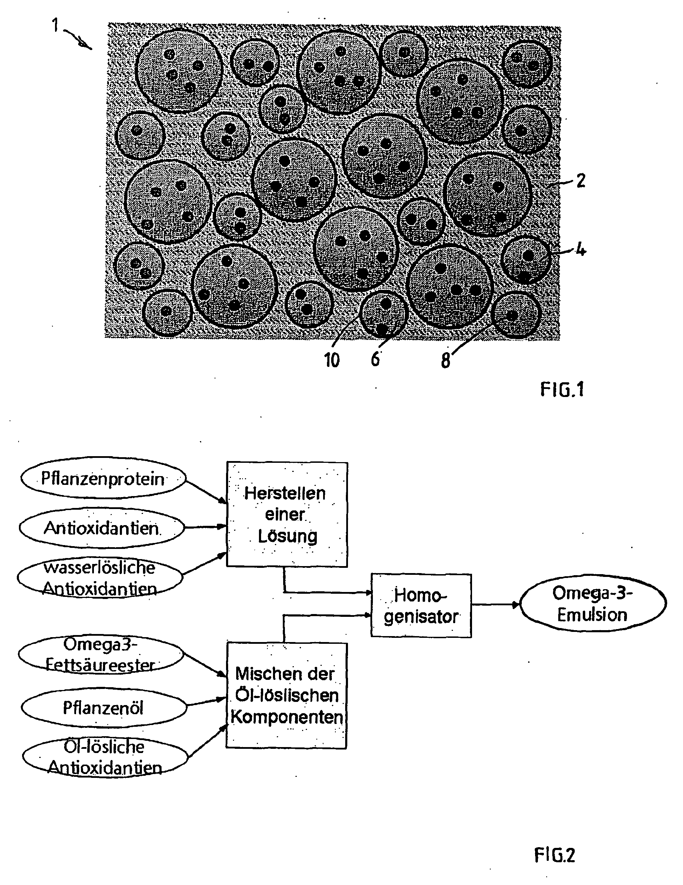

Die Zusammensetzung der Emulsion 1 wird insbesondere in Fig.1 veranschaulicht, wobei die wässrige Phase 2 (äußere Phase oder kontinuierliche Phase) der Emulsion 1 mit wenigstens einem wasserlöslichen Antioxidans angereichert ist. Die Fett- oder Ölphase 4 (innere Phase oder disperse Phase) der Emulsion 1 mit wenigstens einem fett- oder öllöslichen Antioxidans angereichert ist und mit Omega-3-Fettsäureester 8 versehene Öltröpfchen 6 aus Pflanzenöl beinhaltet, wobei die Pflanzenöltröpfchen 6 jeweils von einer Pflanzenproteinhülle 10 umgeben sind. Eine solche Emulsion 1 wird zur Herstellung von Nahrungsmitteln verwendet, wobei ein Nahrungsmittel im Sinne der Erfindung Tiernahrungsmittel und Nahrungsmittel für Menschen umfasst. Wenn eine solche Emulsion 1 zur Herstellung von Nahrungsmitteln verwendet wird, bringt sie folgende Vorteile mit sich:
Das wenigstens eine, in der Fett- oder Ölphase 4 vorhandene fettlösliche Antioxidanz verhindert eine Oxidation der Omega-3-Fettsäure-Ester 8 innerhalb der Pflanzenöltröpfchen 6, weshalb die Emulsion 1 geruchsneutral ist. Darüber hinaus verhindert das fettlösliche Antioxidanz auch eine Oxidation des Pflanzenöls 6 selbst, was vor allem bei mit Pflanzenöl angereicherten Wurstwaren ein Problem darstellt.

- Das wenigstens eine, in der Wasserphase 2 der Emulsion 1 enthaltene wasserlösliche Antioxidans behindert eine Einlagerung von Sauerstoffmolekülen in der Wasserphase 2.
- Die Pflanzenproteinhülle 10 der Pflanzenöltröpfchen 6 bremst die Diffusion von Sauerstoffmolekülen und erzwingt eine längere Kontaktzeit zwischen dem wasserlöslichen Antioxidans in der Wasserphase 2 und den Sauerstoffmolekülen.
- Das öllösliche Antioxidanz behindert eine Oxidation der in den Pflanzenöltröpfchen 6 gebundenen Omega-3-Fettsäure-Ester 8.

Folglich muss Sauerstoff, um die in den Pflanzenöltröpfchen 6 gebundenen Omega-3-Fettsäure-Ester 8 zu oxidieren, zunächst das wenigstens eine wasserlösliche Antioxidanz passieren. Diejenigen Sauerstoffmoleküle, welche die Wasserphase 2 passieren können, müssen dann die weiterhin die Hülle 10 aus Pflanzenprotein durchdringen, welche jeweils ein Pflanzenöltröpfchen 6 umhüllt oder umgibt. Diese Pflanzenproteinhülle 10 bremst die Diffusion der Sauerstoffmoleküle und erzwingt eine längere Kontaktzeit zwischen dem wasserlöslichen Antioxidans in der Wasserphase 2 und den Sauerstoffmolekülen. Dann ist davon auszugehen, dass diejenigen Sauerstoffmoleküle, welche auch diese Hürde nehmen, schließlich von dem öllöslichen Antioxidanz in den Pflanzenöltröpfchen 6 unschädlich gemacht werden, so dass im wesentlichen kein Sauerstoff zu dem Omega-3-Fettsäure-Ester 8 durchdringen kann.

Aus den genannten Gründen ist die beschriebene Emulsion äußerst oxidationsstabil.

Alternativ wird die der Erfindung zugrunde liegende Aufgabe durch ein Gel zur Herstellung von Omega-3-Fettsäure-haltigen Nahrungsmitteln gelöst, welches durch ein feindisperses System
a) aus denaturiertem Pflanzenprotein,
b) aus mit wenigstens einem wasserlöslichen Antioxidans versehenem Wasser sowie
c) aus gebundenen, mit wenigstens einem fett- oder öllöslichen Antioxidans und mit Omega-3-Fettsäureester versehenen Öltröpfchen aus Pflanzenöl gebildet wird.

Dieses Gel wird bevorzugt durch Erhitzen der oben beschriebenen Emulsion über einen Zeitraum von 15 bis 240 min (Minuten) auf eine Temperatur von 40 bis 85 °C erhalten. Das Gel weist die gleichen Vorteile wie die ihm zugrunde liegende Emulsion auf. Ein spezifischer Vorteil des Gels liegt darüber hinaus darin, dass es eine Stabilisierung der Emulsion und insbesondere der Öltröpfchen innerhalb der Wasserphase fördert.

Bevorzugt enthält das wenigstens eine wasserlösliche Antioxidans Zitronensäure und/oder Ascorbinsäure. Besonders eine Kombination aus Zitronensäure und Ascorbinsäure ermöglicht eine besonders oxidationsstabile Emulsion.

Gemäß einer Weiterbildung können die Omega-3-Fettsäureester 8 Ester der hochungesättigten Fettsäuren Eikosapentaensäure (EPA) und Dokosahexaensäure (DHA) enthalten. Verfahren zur Herstellung eines Fettsäurealkylesters beispielsweise durch Umesterung von Triglycerid, das in einer Vielzahl von Ölen und Fetten enthalten ist, sind hinlänglich bekannt, beispielsweise aus der DE 699 31 897 T2. Gegenüber Triglyceriden haben Omega-3-Fettsäureester den Vorteil, dass sie hydrophiler und deshalb besser in die Emulsion einbindbar sind.

Beispielsweise kann das Pflanzenöl, welches die Pflanzenöltröpfchen 6 in der Emulsion oder im Gel ausbildet, Walnussöl, Rapsöl, Leinsamenöl, Chiaöl, Hanföl, Sojaöl, Perillaöl oder eine Mischung aus mindestens zweien dieser Öle beinhalten.

Das wenigstens eine fett- oder öllösliche Antioxidans enthält bevorzugt α-Tocopherol (Vitamin E).

Die Emulsion 1 bzw. das aus ihr hergestellte Gel wird bevorzugt als Fertigprodukt als Zusatz oder Zutat zur Herstellung von Nahrungsmitteln für Mensch und/oder Tier in geeignete, luftdichte Verpackung verpackt und als selbstständig handelbare Ware angeboten werden.

Alternativ wird die fertige Emulsion 1 bzw. das fertige Gel als Zusatz oder Zutat direkt in das Nahrungsmittel eingearbeitet und letzteres dann als handelbare Ware beispielsweise luftdicht verpackt

Das Verfahren zur Herstellung der Emulsion beinhaltet gemäß Fig.2 wenigstens die folgenden Schritte:
a) Lösen wenigstens eines wasserlöslichen Antioxidans in Wasser zum Bilden einer wässrigen, wenigstens ein wasserlösliches Antioxidans enthaltenden Lösung;
b) Einbringen wenigstens eines Pflanzenproteins in die durch Schritt a) erhaltene Lösung zum Bilden einer homogenen wässrigen, das wenigstens eine wasserlösliche Antioxidans und das wenigstens eine Pflanzenprotein enthaltenden Lösung; und zeitlich vor, parallel zu oder nach den Schritten a) und b):
c) Einbringen wenigstens eines fett- oder öllöslichen Antioxidans in Pflanzenöl zum Bilden einer Mischung aus Pflanzenöl und fett- oder öllöslichem Antioxidans;
d) Einbringen von Omega-3-Fettsäureester in die in die durch Schritt c) erhaltene Mischung aus Pflanzenöl und dem wenigstens einen fett- oder öllöslichem Antioxidans zum Bilden einer Mischung aus Omega-3-Fettsäureester, Pflanzenöl und fett- oder öllöslichem Antioxidans;
e) Dosieren der durch Schritt d) erhaltenen Mischung aus Omega-3-Fettsäureester, Pflanzenöl und fett- oder öllöslichem Antioxidans in die durch Schritt b) erhaltene, das wenigstens eine wasserlösliche Antioxidans und das wenigstens eine Pflanzenprotein enthaltende wässrige Lösung;
f) Homogenisieren der Mischung aus Omega-3-Fettsäureester, Pflanzenöl und fett- oder öllöslichem Antioxidans einerseits und der wässrigen Lösung aus wenigstens einem wasserlösliche Antioxidans und dem wenigstens einen Pflanzenprotein andererseits zur Ausbildung der Emulsion.

Gemäß einer Alternative kann auch auf das Einbringen von Omega-3-Fettsäureester in die durch Schritt c) erhaltene Mischung aus Pflanzenöl und dem wenigstens einen fett- oder öllöslichem Antioxidans verzichtet werden. Dann besteht die Öl- oder Fettphase der Emulsion lediglich aus Pflanzenöl und fett- oder öllöslichem Antioxidans. Im Ergebnis wird in diesem Fall eine Emulsion erhalten, welche folgendes beinhaltet:
a) eine äußere Wasserphase, welche wenigstens ein in Wasser gelöstes wasserlösliches Antioxidans enthält;
b) eine innere Fett- oder Ölphase, welche mit wenigstens einem fett- oder öllöslichen Antioxidans versehene Öltröpfchen aus Pflanzenöl beinhaltet, wobei die Pflanzenöltröpfchen jeweils von einer Hülle aus Pflanzenprotein umgeben sind.

Das Einbringen wenigstens eines Pflanzenproteins erfolgt beispielsweise mittels eines Wendelrührers oder einer Kolloidmühle, das optionale Einbringen von Omega-3-Fettsäureester in die Mischung aus Pflanzenöl und fett- oder öllöslichem Antioxidans erfolgt bevorzugt unter Schutzatmosphäre, welche durch Ausschluss von Sauerstoff und beispielsweise 80% N₂ und 20% CO₂ charakterisiert ist.

Das Dosieren der Mischung aus Omega-3-Fettsäureester, Pflanzenöl und fett- oder öllöslichem Antioxidans in die das wenigstens eine wasserlösliche Antioxidans und das wenigstens eine Pflanzenprotein enthaltende wässrige Lösung erfolgt bevorzugt dadurch, dass die die äußere Wasserphase wässrige Lösung in einer Dispergiereinheit wie einer Zahnkranzdispergiermaschine oder einer Kolloidmühle vorgelegt und die die innere Ölphase der Emulsion bildende Mischung aus Pflanzenöl, fett- oder öllöslichem Antioxidans und optional Omega-3-Fettsäureester kontinuierlich zudosiert wird.

Beim Dosieren der Öl- oder Fettphase in die Wasserphase beträgt die Prozesstemperatur vorzugsweise weniger als 20°C, insbesondere weniger als 10°C. Das Homogenisieren der Mischung aus Ölphase und Wasserphase erfolgt beispielsweise in einem Homogenisator oder in einem Hochdruckhomogenisator.

Zunächst werden daher bevorzugt die löslichen Antioxidanzien (Zitronensäure, Ascorbinsäure) in Wasser gelöst. Anschließend wird das Pflanzenprotein in die Lösung eingerührt. Zur besseren Lösung wird entweder ein Wendelrührer oder, bei besonders hoch konzentrierten Mischungen, eine Kolloidmühle verwendet. Nach diesem Prozessschritt liegt eine homogene, wässrige Lösung aus Pflanzenprotein und Antioxidanzien vor.

Im nächsten Schritt werden bevorzugt die öllöslichen Antioxidantien in Pflanzenöl eingerührt. Bevorzugt erst danach werden die optionalen Omega-3-Fettsäureester in die Öl-Antioxidans-Mischung eingerührt, und zwar in flüssiger, gelartiger oder pulverisierter Form. Dies hat den Vorteil, dass die Omega-3-Fettsäureester, welche zuvor unter Schutzatmosphäre und Sauerstoffausschluss gelagert waren, die nach dem Öffnen der Packung beim Dosieren kurz mit Sauerstoff Kontakt haben, sofort in eine antioxidative Umgebung (Öl-Antioxidans-Mischung) eingemischt werden, und somit Oxidationseffekte möglichst verhindert werden.

Besonders vorteilhaft erfolgt die Dosierung und Mischung ebenfalls unter Schutzatmosphäre, beispielsweise unter Sauerstoffabschluss und 80% N₂ sowie 20% CO₂.

Die Wasser-Protein-Antioxidans-Mischung wird in einer Dispergiereinheit (entweder Zahnkranzdispergiermaschine oder Kolloidmühle) vorgelegt. Die Mischung wird im Kreis gepumpt, zugleich wird kontinuierlich die Öl-Mischung zudosiert. Durch die Dispergiereinheit wird die Ölphase homogen in der wässrigen Phase verteilt und voremulgiert. Dieser Prozess findet möglichst bei Temperaturen unter 20°C, besser unter 10°C statt.

Die voremulgierte Mischung wird dann in den Homogenisator oder Hochdruckhomogenisator homogenisiert. Dabei werden die zuvor gleichmäßig verteilten Öltröpfchen stark zerkleinert und dadurch stabilisiert. Die nach dem Homogenisationsprozess entstandene Emulsion wird möglichst kühl, unter Licht- und Sauerstoffausschluss bis zur weiteren Verwendung gelagert.

### Beispiel 1:

Herstellung von 25kg Emulsion mit 4% Omega3-Fettäureester
1. Zunächst werden 14,7 kg Wasser bei 20°C vorgelegt.
2. Anschließend werden 34g Zitronensäure und 68g Ascorbinsäure in das Wasser eingerührt.
3. Einmischen von 3,06 kg Erbsenproteinisolat mittels einer Kolloidmühle, Abstand Rotor/Stator 1-2 mm, Mischzeit 4 Minuten, Kühlung bei 20°C;
4. Vorlegen von 6,01 kg Rapsöl, Einmischen von 68 g Winox (Rosmarinextrakt) sowie 85g alpha-Tocopherol mittels einer Labor-Zahnkranzdispergiermaschine (Turrax), 3 Minuten bei 15 000 U/min, T=20°C, Einmischen von 1020g Omega-3-Ethylester (KD-Pharma Omega-3>90EE) bei 9000 U/min für 1 Minute bei 20°C;
5. Vorlegen der wässrigen Lösung (aus Punkt 3) in einer Zahnkranz-Dispergiereinheit (Fryma Koruma Disholab), Einmischen und Voremulgieren der Öl-Phase (aus Punkt 4) unter 700 mbar Vakuum, 15°C für 20 Minuten bei einer Umdrehungszahl von 4500 U/min.
6. Homogenisieren der Voremulsion aus Punkt 5 mittels eines Hochdruckhomogenisators APV2000 bei 500 bar, einstufig, Temperatur 15-20°C;
7. Abpacken der Emulsion unter Vakuum oder Schutzgas (80% N₂, 20% CO₂), Kühlen bei 1 °C.

Zur Herstellung des Gels aus der Emulsion wird diese bevorzugt über einen Zeitraum von 15 bis 240 min auf eine Temperatur von 40 bis 85 °C erhitzt. Dadurch wird das in der Emulsion enthaltene Pflanzenprotein denaturiert und bildet um die Pflanzenöltröpfchen ein stabilisierendes Netzwerk aus.

Die Emulsion bzw. das Gel kann mit unterschiedlichen Anteilen an Omega-3-Fettsäureester hergestellt werden. Je nach Zugabemenge variiert der Gehalt an Omega-3-Fettsäureester in der Emulsion bzw. im Gel bevorzugt zwischen 0,0 Gew.% (kein Anteil an Omega-3-Fettsäureester) und 10 Gew.%. Höhere Gehalte als 10 Gew.% an Omega-3-Fettsäureester sind aus Gründen einer dann ungünstigen Textur und Sensorik von mit der Emulsion bzw. mit dem Gel hergestellten Produkten nicht ratsam.

Falls gemäß der Alternative in die Emulsion kein Omega-3-Fettsäureester eingegeben wird, wird das entsprechende Gel durch ein feindisperses System
a) aus denaturiertem Pflanzenprotein,
b) aus mit wenigstens einem wasserlöslichen Antioxidans versehenem Wasser sowie
c) aus gebundenen, mit wenigstens einem fett- oder öllöslichen Antioxidans versehenen Öltröpfchen aus Pflanzenöl gebildet.

Eine demgegenüber bevorzugt mit Omega-3-Fettsäureester versehene Emulsion oder ein entsprechende Gel wird beispielsweise in einem Anteil von 25 Gew.% gemessen an der Gesamtmasse beispielsweise in eine Wurstbrätmasse eingearbeitet, wobei dann die aus der Wurstbrätmasse hervorgehende Wurst beispielsweise einen Gehalt an Omega-3-Fettsäureester von 1 Gew.% aufweist.

Dabei wird zuerst die Emulsion bzw. das Gel als Fertigprodukt zuerst komplett hergestellt und dann erst im Ganzen als Zusatz oder Zutat im Laufe des Zerkleinerungsvorgangs in die Wurstbrätmasse eingearbeitet.

Folglich wird allgemein eine Fleisch von wenigstens einem Säugetier und/oder von wenigstens einem Fisch und/oder Bestandteile wenigstens einer Pflanze enthaltende Rohmasse zunächst wenigstens teilweise zerkleinert und dann mit der zuvor fertig gestellten Emulsion oder mit dem zuvor fertig gestellten Gel vermischt. Die Emulsion bzw. das Gel wird hingegen nicht erst im Laufe der bzw. durch die Zerkleinerung der Rohmasse gebildet bzw. hergestellt.

Dies führt dazu, dass die fertig gestellte Emulsion vor dem Einarbeiten in die Wurstbrätmasse sehr stabil ist und die Pflanzenöltröpchen relativ klein sind. Weiterhin kann dann das Wurstbrät bei niedrigeren Scherraten schonender gekuttert werden, denn der Energieeintrag zur Herstellung der Emulsion hat bereits bei dem zuvor stattfindenden separaten Emulgieren der Emulsion stattgefunden. Außerdem kann die Emulsion im Kutter nicht so homogen wie in einem Homogenisator hergestellt werden, die Größen der dann enstehenden Pflanzenöltröpfchen wären dann sehr unterschiedlich. Weiterhin können in der fertigen Emulsion durch den Homogenisator wesentlich kleinere Pflanzenöltröpfchen erzielt werden als in einem Kutter, was zu einer vorteilhaft stabilen Emulsion führt. Dies wiederum resultiert in einer festeren Textur, einem besseren Mundgefühl und Geschmack der daraus hergestellten Wurstware.

Schließlich werden aufgrund der besseren Verkapselung der Pflanzenöltröpfchen in der zuvor fertig gestellten Emulsion störende Aromakomponenten sehr effektiv minimiert. Schließlich können die Pflanzenproteine bei der separaten Herstellung der Emulsion viel konzentrierter als Emulgator und Kapselbilder fungieren als bei einer vorherigen Verdünnung im Kutter durch die Wurstbrätmasse.

Die Kombination von in einer Wasserphase einer fertigen und stabilen Emulsion verteilter und mit einer Proteinhülle umgebener Pflanzenöltröpfchen bietet weitere besondere Vorteile.

Zum einen sind die Öltröpfchen sehr klein, so dass diese sensorisch kaum wahrnehmbar sind. Im Gegensatz dazu sind Gelatinekapseln als Oxidationsschutz für Omega-3-Fettsäuren im Mund spürbar. Weiterhin werden Gelatinekapseln bei der Einarbeitung in Wurstbrätmassen beim Kuttern zerstört. In der Folge würde das Pflanzenöl austreten, was zu unerwünschten Fehlaromen führt. Weiterhin ist Gelatine hitzereversibel, d.h. beim Erwärmen (Brühen) der Würste würden Gelatinekapseln schmelzen und das Pflanzenöl ebenfalls austreten. Außerdem ist um Gelatinekapseln keine definierte Wasserphase stabilisierbar, so dass keine Bindekräfte vorliegen und die Antioxidantien weggewaschen werden würden. Bei einer Emulsion wirken demgegenüber die Bindekräfte des Emulgators.

Brätmasse im Sinne der Erfindung ist zum einen feinteiliges Brät (beispielsweise aus einer Fleischaufschlussvorrichtung wie einem Kutter) aber auch Hackbrät oder grobes Brät (beispielsweise aus einem Fleischwolf).

Allgemein wird eine Fleisch von wenigstens einem Säugetier und/oder von wenigstens einem Fisch und/oder Bestandteile wenigstens einer Pflanze enthaltende Rohmasse zerkleinert und mit der Emulsion oder mit dem Gel vermischt. Der Gehalt der Emulsion oder des Gels in der Rohmasse liegt bevorzugt in einem Bereich zwischen größer als 0,0 Gew.% und kleiner 40 Gew.%, besonders bevorzugt in einem Bereich zwischen 10 Gew.% und 25 Gew.%.

Die Rohmasse, beispielsweise Fleisch von Säugetieren und/oder von Fischen und/oder Bestandteile von Pflanzen werden in einer Zerkleinerungsvorrichtung, insbesondere in einer Fleischaufschlussvorrichtung wie einem Kutter oder einem Fleischwolf zu einer Rohmasse zerkleinert. Dann wird die Emulsion oder das Gel der Rohmasse bevorzugt in gefrorenem Zustand zugegeben bzw. zugemischt.

Wie oben bereits beschrieben, wird die Rohmasse bevorzugt durch eine Wurstbrätmasse gebildet, wobei die Emulsion oder das Gel der Wurstbrätmasse zugegeben wird wenn im wesentlichen 2/3 der gesamten Wurstbrätherstellungszeit vergangen ist und während dem verbleibenden 1/3 der gesamten Wurstbrätherstellungszeit in der Wurstbrätmasse verteilt wird.

Die Emulsion bzw. das Gel wird besonders bevorzugt bei der Herstellung von Wurstwaren in die Wurstbrätmasse eingearbeitet. Der Anteil der Emulsion bzw. des Gels an der Gesamtbrätmasse liegt bevorzugt zwischen mehr als 0,0 Gew.% und weniger als 40 Gew. %. Da, wie oben bereits beschrieben der Gehalt an Omega-3-Fettsäureester in der Emulsion bzw. in dem Gel vorzugsweise zwischen 0,0 Gew.% (kein Omega-3-Fettsäureester) und 10 Gew.% variiert, liegt der Gehalt an Omega-3-Fettsäureester in der Gesamtbrätmasse und damit auch im späteren Wurstprodukt bevorzugt in einem Bereich zwischen 0,0 Gew.% und etwa 3 Gew.% und ist individuell einstellbar.

Bei einem Anteil von 10 Gew.% bis 25 Gew.% von Emulsion bzw. Gel an der Gesamtbrätmasse tritt eine deutliche Texturverbesserung, insbesondere bei der Einarbeitung in fettarme Brätmassen auf. Die Textur der Wurst wird signifikant geschmeidiger, glatter, fester und saftiger.

Bei der Einarbeitung der Emulsion in eine Wurstbrätmasse, welche Fischfleisch enthält, besonders auch bei der Verwendung von Fischfleisch mit ausgeprägt fischigem Aroma und Geruch wird bei einem Anteil von 10 Gew.% bis 25 Gew.% Emulsion bzw. Gel an der Gesamtbrätmasse eine deutliche Neutralisierung des Fischaromas erzielt und die fischigen Geruchs- und Geschmackskomponenten überdeckt. Dabei kann die Emulsion einen Anteil an Omega-3-Fettsäureester bis zu 8 Gew.% aufweisen.

Darüber hinaus ist es auch denkbar, die Emulsion bzw. ein Gel ohne jegliche Omega-3-Fettsäureester zu verwenden, um lediglich Vorteile hinsichtlich Sensorik und Textur der bevorzugt hergestellten Wurstware zu erzielen, wie unten noch im Einzelnen beschrieben wird, dann findet jedoch keine Anreicherung mit Omega-3-Fettsäuren statt.

Wie oben beschrieben, wird die fertige Emulsion bzw. das fertige Gel bevorzugt im Laufe der Zerkleinerung in einer Fleischaufschlussvorrichtung wie einem Kutter der Wurstbrätmasse beigemischt. Die Mengen der üblichen Gewürze wie beispielsweise Salz werden auf die Gesamtbrätmasse (Brätmasse + Emulsion) berechnet und beispielsweise zu Beginn des Kutterprozesses zugegeben. Der Brätmasse können auch folgende Zutaten zugefügt werden: Phosphat, Salz, Nitripökelsalz, Gemüse, Brühe, L-Carnitin-enthaltende Substanzen, Aromastoffe, Geschmacksträger, natürliche Supplemente wie beispielsweise Vitamine, Mineralstoffe und Spurenelemente, probiotische Bakterien, synthetische Supplemente, Medikamente, medikamentenähnliche Substanzen wie beispielsweise L-Carnitin-enthaltende Substanzen (beispielsweise Liebig'scher Extrakt) oder Texturierungsmittel wie beispielsweise Paniermehl.

Die Emulsion bzw. das Gel wird bevorzugt im gekühlten oder gefrorenen Zustand beigemengt. Nach Einarbeitung der Emulsion und Beendigung des Kutterprozesses wird die Gesamtbrätmasse dann in Hüllen bzw. Därme gespritzt und die daraus entstehenden Wurstrohlinge werden dann je nach gewünschter Wurstart (Kochwurst, Brühwurst, Streichwurst, Räucherwurst, Rohwurst etc.) gebrüht, geräuchert bzw. gereift.

Die erfindungsgemäße Emulsion bzw. das Gel eignet sich daher besonders zur Herstellung von Wurstwaren wie Rohwürsten, Brühwürsten, Kochwürsten, Kochstreichwürsten sowie von Hackfleischprodukten. Die Verwendung ist aber nicht auf diese Produkte beschränkt, sondern kann für jegliche Nahrungs-, Genuss-, oder Lebensmittel erfolgen.

Insbesondere kann die Emulsion oder das Gel zur Herstellung von auf Hackfleisch basierenden Nahrungsmitteln verwendet werden, beispielsweise für Hamburger, Frikadellen, Hackfleischwürste, Hackfleischbällchen, Teigfüllungen für Maultaschen oder Pasteten etc., indem die Emulsion oder das Gel in die Hackfleischmasse eingearbeitet wird. Die Rohmasse für das Hackfleisch kann dabei Fleisch von Säugetieren (Schwein, Rind, Geflügel) und/oder Fleisch von Fischen und/oder Bestandteile von Pflanzen enthalten, so dass als Rohmasse auch "Hackfleisch" rein pflanzlichen Ursprungs denkbar ist, beispielsweise sog. Gemüseburger, in welche die Emulsion oder das Gel eingearbeitet wird.

Wenn daher die oben beschriebene Emulsion oder das hieraus hervorgegangene Gel als Zusatz oder Zutat in Nahrungsmitteln verwendet wird, ergeben sich eine Reihe von Vorteilen:
- Sofern die Emulsion Omega-3-Fettsäureester enthält, wird das betreffende Nahrungsmittel mit Omega-3-Fettsäure angereichert, wobei der Gehalt an Omega-3-Fettsäure durch die Zugabemenge in der Emulsion bzw. im Gel oder durch die Zugabemenge der Emulsion oder des Gels in das Nahrungsmittel gezielt gesteuert werden kann. Ein Nahrungsmittel, welches beispielsweise ursprünglich einen niedrigen Gehalt an Omega-3-Fettsäure oder überhaupt keinen solchen aufweist, wie beispielsweise Fleisch von Säugetieren oder von Süßwasserfischen oder von in warmen Meeren lebenden Meeresfischen kann dann als funktionelles Nahrungsmittel durch die eingangs beschriebenen positiven Eigenschaften von Omega-3-Fettsäure ergänzt werden.
- Wegen des oben beschriebenen umfassenden Oxidationsschutzes der Emulsion bzw. des Gels neigen die darin optional enthaltenen Omega-3-Fettsäureester nicht zur Oxidation. Folglich wird bei der Emulsion bzw. dem Gel eine Geruchsbildung weitgehend vermieden. Sie bzw. es eignet sich deshalb insbesondere als Zusatz in Nahrungsmitteln und Produkten langer Haltbarkeit oder langer Lagerungsdauer im Verkaufsregal oder beim Konsumenten.
- Wenn die fertige Emulsion oder das Gel in zerkleinerte und Fischfleisch enthaltende Rohmassen eingearbeitet wird wie etwa in eine Fischfleisch enthaltende Wurstbrätmasse oder in ein Fischfleisch enthaltendes Ragout, dann bewirken die in der Wasserphase der Emulsion bzw. des Gels vorhandenen wasserlöslichen und sauer (pH<7) wirkenden Antioxidanzien, welche zunächst nur als Schutz vor Oxidation der Omega-3-Fettsäureester der Emulsion bzw. des Gels vorgesehen sind, zusätzlich, dass bei dem Fischfleisch ein deutlich neutralerer Aromeindruck entsteht, wie sensorische Versuche der Anmelderin gezeigt haben. Mit der Emulsion bzw. dem Gel versehenes zerkleinertes Fischfleisch wies demnach ein deutlich geringeres Fischaroma auf als Fischfleisch ohne den Emulsions- oder Gelzusatz, weshalb aus einem solchermaßen angereicherten Fischfleisch hervorgehende Nahrungsmittel wie beispielsweise Fischfleisch enthaltende Wurstwaren eine höhere Akzeptanz beim Verbraucher als bisher genießen dürften. Dann ist es möglich, auf Fischfleisch basierende Produkte wie beispielsweise Fischwürste herzustellen und dennoch den fischtypischen Geschmack zu unterdrücken, so dass die Endprodukte nicht nur wie herkömmliche Fleischprodukte aussehen, sondern als Besonderheit auch deren Geschmack aufweisen. Der Effekt der Minderung fischiger Aromen tritt insbesondere unabhängig davon auf, ob die Emulsion bzw. das Gel Omega-3-Fettsäureester beinhaltet oder nicht.

- Wenn die fertige Emulsion in zerkleinerte Rohmassen wie Wurstbrätmassen auf der Basis von Fleisch von Säugetieren wie beispielsweise vom Schwein, Rind oder Geflügel eingearbeitet wird, ist festzustellen, dass der Eigengeschmack des Fleischs verringert und der Geschmack von dem Fleisch üblicherweise beigemengten Kräutern und Gewürzen signifikant verstärkt wird. Deshalb kann bei mit Hilfe der Emulsion oder mit Hilfe des Gels erzeugten, auf Fleisch basierenden Nahrungsmitteln auf eine Zugabe von Geschmack verstärkenden Stoffen und Aromen wie Glutamat verzichtet werden. Auch dieser positive Effekt tritt unabhängig davon auf, ob die Emulsion bzw. das Gel Omega-3-Fettsäureester beinhaltet oder nicht.
- Ein wesentlicher Vorteil der Verwendung der Emulsion oder des Gels als Zutat oder Zusatz in auf zerkleinerten Rohmassen basierenden Nahrungsmitteln wie Wurstbrätmassen oder Hackfleischmassen liegt in der entscheidenden Verbesserung der Textur von solchermaßen hergestellten Nahrungsmitteln (Wurstwaren, Hamburger, Frikadellen, Fleischklößchen etc.). Im einzelnen ergab sich eine bessere Bissfestigkeit, Homogenität, Wasserbindungsfähigkeit und Saftigkeit von Produkten, in deren zerkleinerte Rohmasse die Emulsion oder das Gel eingearbeitet wurde, verglichen mit einem ohne die Emulsion bzw. ohne das Gel hergestellten Produkt. Die zerkleinerte Rohmasse kann dabei Fleisch von wenigstens einem Säugetier und/oder von wenigstens einem Fisch und/oder Bestandteile wenigstens einer Pflanze enthalten. Nicht zuletzt tritt dieser positive Effekt unabhängig davon auf, ob die Emulsion bzw. das Gel Omega-3-Fettsäureester beinhaltet oder nicht.

### Beispiel 2:

Herstellung von Geflügel-Rindwurst mit 1 Gew.% Omega-3-Fettsäure-Gehalt

| Zutat | Menge [Gew. %] | Menge [g] |
|---|---|---|
| Fleisch, Rind, mager | 10,34 | 2000 |
| Fleisch, Pute, mager | 41,37 | 8000 |
| Eis, -20 - -50°C | 20,17 | 3900 |
| Nitritpökelsalz | 1,40 | 270 |
| Phosphat *mit* Umrötung | 0,27 | 52.5 |
| Gewürz | 0,59 | 114 |
| | 0,00 | |
| Omega-Emulsion (4% Omega-3-Fettsäureester) | 25,86 | 5000 |
| | 0,00 | |
| | | |
| Gesamt [g] | 100 | 19336,5 |
| | | |
| *Kutterdrehzahl* [*U*/*min*] | 3600 | |
| Kutterzeit [min] | ca. 8 | |
| erreichte Temp. [°C] | 8-10 | |
| | | |
| Zugabe der Emulsion nach 2/3 der Kutterzeit | | |
| Mischen | | |
| Füllen | | |
| | | |
| *Brühtemperatur* [°C] | 72 | |
| Brühzeit [min] | 120-150 | |
| Kühltemperatur [°C] | 5-7 | |

### Beispiel 3:

Herstellung einer Fischwurst ohne Zusatz von Omega-3-Fettsäure

| Zutat | Menge [%] | Menge [g] |
|---|---|---|
| Fischfilets | 63,26 | 5500 |
| Eis, -20- -50°C | 9,78 | 850 |
| Nitritpökelsalz | 1,75 | 152 |
| Gewürz | 0,21 | 18 |
| Emulsion (0% Omega-3-Fettsäureester) | 25,01 | 2174 |
| | | |
| | | |
| *Gesamt* [g] | 100,00 | 8694 |
| | | |
| Kutterdrehzahl [U/min] | 3600 | |
| Kutterzeit [min] | ca. 8 | |
| erreichte Temp. [°C] | 8-10 | |
| | | |
| Zugabe der Emulsion nach 2/3 der Kutterzeit | | |
| Mischen | | |
| Füllen | | |
| | | |
| Brühtemperatur [°C] | 72 | |
| Brühzeit [min] | 120-150 | |
| Kühltemperatur [°C] | 5-7 | |

## Patentansprüche

1. Emulsion (1) als Zusatz oder Zutat zur Herstellung von Omega-3-Fettsäure-haltigen Nahrungsmitteln, beinhaltend:
a) eine äußere Wasserphase (2), welche wenigstens ein in Wasser gelöstes wasserlösliches Antioxidans enthält;
b) eine innere Fett- oder Ölphase (4), welche mit wenigstens einem fett- oder öllöslichen Antioxidans und mit Omega-3-Fettsäureester (8) versehene Öltröpfchen (6) aus Pflanzenöl beinhaltet, wobei die Pflanzenöltröpfchen (6) jeweils von einer Hülle (10) aus Pflanzenprotein umgeben sind.

2. Gel als Zusatz oder Zutat zur Herstellung von Omega-3-Fettsäure-haltigen Nahrungsmitteln, **dadurch gekennzeichnet, dass** es durch ein feindisperses System
a) aus denaturiertem Pflanzenprotein,
b) aus mit wenigstens einem wasserlöslichen Antioxidans versehenem Wasser sowie
c) aus gebundenen, mit wenigstens einem fett- oder öllöslichen Antioxidans und mit Omega-3-Fettsäureester versehenen Öltröpfchen aus Pflanzenöl gebildet wird.

3. Emulsion oder Gel nach Anspruch 1 oder 2, **dadurch gekennzeichnet, dass** das wenigstens eine wasserlösliche Antioxidans Zitronensäure und/oder Ascorbinsäure enthält.

4. Emulsion oder Gel nach einem der vorhergehenden Ansprüche, **dadurch gekennzeichnet, dass** die Omega-3-Fettsäureester (8) Ester der hochungesättigten Fettsäuren Eikosapentaensäure (EPA) und Dokosahexaensäure (DHA) enthalten.

5. Emulsion oder Gel nach einem der vorhergehenden Ansprüche, **dadurch gekennzeichnet, dass** das Pflanzenprotein Protein von Erbsen enthält.

6. Emulsion oder Gel nach einem der vorhergehenden Ansprüche, **dadurch gekennzeichnet, dass** das Pflanzenöl Walnussöl, Rapsöl, Leinsamenöl, Chiaöl, Hanföl, Sojaöl, Perillaöl oder eine Mischung aus mindestens zwei dieser Öle beinhaltet.

7. Emulsion oder Gel nach einem der vorhergehenden Ansprüche, **dadurch gekennzeichnet, dass** das wenigstens eine, fett- oder öllösliche Antioxidans α-Tocopherol enthält.

8. Verfahren zur Herstellung einer Emulsion nach einem der Ansprüche 1 oder 3 bis 7, beinhaltend wenigstens die folgenden Schritte:
a) Lösen wenigstens eines wasserlöslichen Antioxidans in Wasser zum Bilden einer wässrigen, wenigstens ein wasserlösliches Antioxidans enthaltenden Lösung;
b) Einbringen wenigstens eines Pflanzenproteins in die durch Schritt a) erhaltene Lösung zum Bilden einer homogenen wässrigen, das wenigstens eine wasserlösliche Antioxidans und das wenigstens eine Pflanzenprotein enthaltenden Lösung; und zeitlich vor, parallel zu oder nach den Schritten a) und b):
c) Einbringen wenigstens eines fett- oder öllöslichen Antioxidans in Pflanzenöl zum Bilden einer Mischung aus Pflanzenöl und fett- oder öllöslichem Antioxidans;
d) Einbringen von Omega-3-Fettsäureester in die durch Schritt c) erhaltene Mischung aus Pflanzenöl und dem wenigstens einen fett- oder öllöslichem Antioxidans zum Bilden einer Mischung aus Omega-3-Fettsäureester, Pflanzenöl und fett- oder öllöslichem Antioxidans;
e) Dosieren der durch Schritt d) erhaltenen Mischung aus Omega-3-Fettsäureester, Pflanzenöl und fett- oder öllöslichem Antioxidans in die durch Schritt b) erhaltene, das wenigstens eine wasserlösliche Antioxidans und das wenigstens eine Pflanzenprotein enthaltende wässrige Lösung;
f) Homogenisieren der Mischung aus Omega-3-Fettsäureester, Pflanzenöl und fett- oder öllöslichem Antioxidans einerseits und der wässrigen Lösung aus wenigstens einem wasserlösliche Antioxidans und dem wenigstens einen Pflanzenprotein andererseits zur Ausbildung der Emulsion.

9. Verfahren zur Herstellung einer Emulsion nach Anspruch 8, **dadurch gekennzeichnet, dass** das Einbringen wenigstens eines Pflanzenproteins gemäß Schritt b) mittels eines Wendelrührers oder einer Kolloidmühle erfolgt.

10. Verfahren zur Herstellung einer Emulsion nach Anspruch 8 oder 9, **dadurch gekennzeichnet, dass** das Einbringen von Omega-3-Fettsäureester in die Mischung aus Pflanzenöl und fett- oder öllöslichem Antioxidans gemäß Schritt d) unter Schutzatmosphäre erfolgt.

11. Verfahren zur Herstellung einer Emulsion nach einem der Ansprüche 8 bis 10, **dadurch gekennzeichnet, dass** das Dosieren gemäß Schritt e) dadurch erfolgt, dass die die äußere Wasserphase bildende, das wenigstens eine wasserlösliche Antioxidanz und das wenigstens eine Pflanzenprotein enthaltende wässrige Lösung in einer Dispergiereinheit wie einer Zahnkranzdispergiermaschine oder einer Kolloidmühle vorgelegt und die die innere Ölphase der Emulsion bildende Mischung aus Omega-3-Fettsäureester, Pflanzenöl und fett- oder öllöslichem Antioxidanz kontinuierlich zudosiert wird.

12. Verfahren zur Herstellung einer Emulsion nach Anspruch 11, **dadurch gekennzeichnet, dass** beim Dosieren der inneren Ölphase in die äußere Wasserphase gemäß Schritt e) die Prozesstemperatur weniger als 20°C, insbesondere weniger als 10°C beträgt.

13. Verfahren zur Herstellung einer Emulsion nach einem der Ansprüche 8 bis 12, **dadurch gekennzeichnet, dass** das Homogenisieren gemäß Schritt f) in einem Homogenisator oder in einem Hochdruckhomogenisator erfolgt.

14. Verfahren zur Herstellung eines Gels aus einer nach einem der Ansprüche 8 bis 13 hergestellten Emulsion, **dadurch gekennzeichnet, dass** die Emulsion über einen Zeitraum von 15 bis 240 min auf eine Temperatur von 40 bis 85 °C erhitzt wird.

15. Verwendung einer Emulsion oder eines Gels nach einem der Ansprüche 1 bis 7 zur Herstellung von Nahrungsmitteln für Mensch und/oder Tier.

16. Verwendung nach Anspruch 15, **dadurch gekennzeichnet, dass** eine Fleisch von wenigstens einem Säugetier und/oder von wenigstens einem Fisch und/oder Bestandteile wenigstens einer Pflanze enthaltende Rohmasse wenigstens teilweise zerkleinert und dann mit der zuvor fertig gestellten Emulsion oder mit dem zuvor fertig gestellten Gel vermischt wird.

17. Verwendung nach Anspruch 16, **dadurch gekennzeichnet, dass** der Gehalt der Emulsion oder des Gels in der Rohmasse in einem Bereich von größer als 0,0 Gew.% und kleiner als 40 Gew.% liegt.

18. Verwendung nach Anspruch 17, **dadurch gekennzeichnet, dass** der Gehalt der Emulsion oder des Gels in der Rohmasse in einem Bereich zwischen 10 Gew.% und 25 Gew.% liegt.

19. Verwendung nach einem der Ansprüche 16 bis 18, **dadurch gekennzeichnet, dass** die Rohmasse in einer Fleischaufschlussvorrichtung wie einem Kutter oder einem Fleischwolf zerkleinert wird.

20. Verwendung nach einem der Ansprüche 16 bis 19, **dadurch gekennzeichnet, dass** die Emulsion oder das Gel der Rohmasse in gefrorenem Zustand zugegeben wird.

21. Verwendung nach einem der Ansprüche 16 bis 20 zur Herstellung von Wurstwaren, **dadurch gekennzeichnet, dass** die Rohmasse eine Wurstbrätmasse beinhaltet.

22. Verwendung nach Anspruch 21, **dadurch gekennzeichnet, dass** die zuvor fertig gestellte Emulsion oder das zuvor fertig gestellte Gel der Wurstbrätmasse zugegeben wird, wenn im wesentlichen 2/3 der gesamten Wurstbrätherstellungszeit vergangen ist und während dem verbleibenden 1/3 der gesamten Wurstbrätherstellungszeit in der Wurstbrätmasse verteilt wird.

23. Verwendung nach einem der Ansprüche 16 bis 20 zur Herstellung von auf Hackfleisch basierenden Nahrungsmitteln, **dadurch gekennzeichnet, dass** die Rohmasse Hackfleisch beinhaltet.

## Claims

1. An emulsion (1) configured as an additive or ingredient for producing food products including omega-3 fatty acid, the emulsion comprising:
a) an outer water phase (2) including at least one water soluble antioxidant that is dissolved in water;
b) an inner fat or oil phase (4) including oil droplets (6) made from plant oil provided with at least one fat or oil soluble antioxidant and with omega-3 fatty acid ester (8) wherein the plant oil droplets (6) are respectively enveloped by a shell (10) made from plant protein.

2. A gel configured as an additive or ingredient for producing food products including omega-3 fatty acid, **characterized in that** the gel is formed by a finely dispersed system comprising;
a) denaturized plant protein,
b) water provided with at least one water soluble antioxidant, and;
c) oil droplets made from bonded plant oil provided with at least one fat or oil soluble antioxidant and with omega-3 fatty acid ester.

3. The emulsion or gel according to claim 1 or 2, **characterized in that** the at least one oil soluble antioxidant includes citric acid and/or ascorbic acid.

4. The emulsion or gel according to one of the preceding claims, **characterized in that** the omega-3 fatty acid esters (8) include esters of the highly unsaturated fatty acids eicosapentaenoic acid (EPA) and docosahexaenoic acid (DHA).

5. The emulsion or gel according to one of the preceding claims, **characterized in that** the plant protein includes protein from peas.

6. The emulsion or gel according to one of the preceding claims, **characterized in that** the plant oil includes walnut oil, canola oil, linseed oil, chia oil, hemp oil, soy oil, parilla oil or a mix including at least two of these oils.

7. The emulsion or gel according to one of the preceding claims, **characterized in that** the at least one fat or oil soluble antioxidant includes α- tocopherol.

8. A method for producing an emulsion according to one of the claims 1 or 3 through 7, comprising at least the following steps:
a) dissolving at least one water soluble antioxidant in water to form an aqueous solution including at least one water soluble antioxidant;
b) introducing at least one plant protein into the solution obtained in step a) for forming a homogenous aqueous solution including the at least one water soluble antioxidant and the at least one plant protein; and before or in parallel to the steps a and b:
c) introducing at least one fat or oil soluble antioxidant in plant oil for forming a mix from plant oil and fat or oil soluble antioxidant;
d) introducing omega-3 fatty acid ester into the mix obtained in step c) including the plant oil and the at least one fat or oil soluble antioxidant for forming a mix including omega-3 fatty acid ester, plant oil and fat or oil soluble antioxidant;
e) dosing the mix obtained in step d) including omega-3 fatty acid ester, plant oil and fat or oil soluble antioxidant into the aqueous solution obtained in step b) including the at least one water soluble antioxidant and the at least one plant protein;
f) homogenizing the mix including omega-3 fatty acid ester, plant oil and fat or oil soluble antioxidant and the aqueous solution including the at least one water soluble antioxidant and the at least one plant protein to form the emulsion.

9. The method for producing an emulsion according to one of the claim 8, **characterized in that** introducing the at least one plant protein according to step b) is performed through a spiral mixer or a colloid mill.

10. The method for producing an emulsion according to one of the claims 8 or 9, **characterized in that** introducing omega-3 fatty acid ester into the mix including plant oil and fat or oil soluble antioxidant according to step d) is performed in an inert gas atmosphere.

11. The method for producing an emulsion according to one of the claims 9 - 10, **characterized in that** dosing according to step e) is performed **in that** the aqueous solution forming the outer water phase and including the at least one water soluble antioxidant and at least one plant protein is provided in a dispersion unit like a gear sprocket dispersion machine or a colloid mill and the mix forming the inner foil phase of the emulsion and including omega-3 fatty acid ester, plant oil and fat or oil soluble antioxidant is continuously added.

12. The method for producing the emulsion according to one of the claims 11, **characterized in that** a process temperature is less than 20°C, in particular less than 10°C when dosing the inner oil phase into the outer water phase according to step e.

13. The method for producing the emulsion according to one of the claims 8 through 12, **characterized in that** the homogenization according to step f) is performed in a homogenizer or in a high pressure homogenizer.

14. The method for producing the gel from the emulsion produced according to one of the claims 8 - 13, **characterized in that** emulsion is heated over a time period of 15 - 240 minutes to a temperature of 40 to 85° C.

15. A use of an emulsion or a gel according to one of the claims 1 through 7 for producing food products for humans and/or animals.

16. The use according to claim 15, **characterized in that** a raw mass including a meat from at least one mammal and/or from at least one fish and/or portions of at least one plant is at least partially ground up and mixed with the previously prepared emulsion or the previously prepared gel.

17. The use according to claim 16, **characterized in that** a content of the emulsion or of the gel in the raw mass is in a range of greater than 0.0% by weight and less than 40% by weight.

18. The use according to claim 17, **characterized in that** the content of the emulsion or the gel in the raw mass is in a range between 10% by weight and 25% by weight.

19. The use according to one of the claims 16 through 18, **characterized in that** the raw mass is ground up in a meat disintegration device like a cutter or a meat grinder.

20. The use according to one of the claims 16 through 19, **characterized in that** the emulsion or the gel is added to the raw mass in frozen condition.

21. The use according to one of the claims 16 through 20 for producing sausage products, **characterized in that** the raw mass includes a sausage base material.

22. The use according to claim 21, **characterized in that** the previously prepared emulsion or the previously prepared gel are added to the sausage base material after essentially 2/3 of a sausage base material preparation time has elapsed and the emulsion or the gel is mixed into the sausage base material during a remaining 1/3 of the entire sausage base material preparation time.

23. The use according to one of the claims 16 through 20, for producing ground meat based food products, **characterized in that** the raw mass includes ground meat.

## Revendications

1. Emulsion (1) comme additif ou ingrédient pour la fabrication d'aliments contenant un acide gras oméga-3 contenant :
a) une phase aqueuse extérieure (2) qui contient au moins un antioxydant dissous dans de l'eau ;
b) une phase grasse ou huileuse intérieure (4) qui contient des gouttelettes d'huile (6) d'une huile végétale pourvues d'au moins un antioxydant soluble dans de la graisse ou de l'huile et d'esters d'acides gras oméga-3, les gouttelettes d'huile (6) étant entourées respectivement d'une enveloppe (10) en protéine végétale.

2. Gel comme additif ou ingrédient pour la fabrication d'aliments contenant un acide gras oméga-3, **caractérisé en ce qu'**il est formé par un système finement dispersé composé
a) de protéine végétale dénaturée,
b) d'eau pourvue d'au moins un antioxydant soluble dans l'eau ainsi que
c) de gouttelettes d'huile d'une huile végétale pourvues d'au moins un antioxydant soluble dans de la graisse ou l'huile et d'ester d'acide gras oméga-3.

3. Emulsion ou gel selon la revendication 1 ou 2, caractérisé(e) en ce que l'antioxydant soluble dans l'eau qui existe au moins contient de l'acide citrique et/ou de l'acide ascorbique.

4. Emulsion ou gel selon l'une des revendications précédentes, caractérisé(e) en ce que les esters d'acides gras oméga-3 (8) contiennent des esters des acides gras extrêmement insaturés, l'acide eicosapentaénoïque (EPA) et l'acide docosahexaénoïque (DHA).

5. Emulsion ou gel selon l'une des revendications précédentes, caractérisé(e) en ce que la protéine végétale contient de la protéine de petits pois.

6. Emulsion ou gel selon l'une des revendications précédentes, caractérisé(e) en ce que l'huile végétale contient de l'huile de noix, de l'huile de colza, de l'huile de lin, de l'huile de chia, de l'huile de chanvre, de l'huile de soja, de l'huile de perilla ou un mélange d'au moins deux de ces huiles.

7. Emulsion ou gel selon l'une des revendications précédentes, caractérisé(e) en ce que l'antioxydant soluble dans de la graisse ou dans de l'huile qui existe au moins contient de l'α-tocophérol.

8. Procédé pour la fabrication d'une émulsion selon l'une des revendications 1 ou 3 à 7 contenant au moins les étapes suivantes :
a) dissolution d'au moins un antioxydant soluble dans l'eau dans de l'eau pour former une solution aqueuse qui contient au moins un antioxydant soluble dans de l'eau ;
b) ajout d'au moins une protéine végétale dans la solution obtenue par l'étape a) pour former une solution aqueuse homogène qui contient l'antioxydant soluble dans l'eau qui existe au moins et la protéine végétale qui existe au moins et avant dans le temps, parallèlement ou après les étapes a) et b) :
c) ajout d'au moins un antioxydant soluble dans de la graisse ou dans de l'huile dans de l'huile végétale pour former un mélange d'huile végétale et d'antioxydant soluble dans de la graisse ou dans de l'huile ;
d) ajout d'esters d'acides gras oméga-3 dans le mélange d'huile végétale et d'au moins un antioxydant soluble dans de la graisse ou dans de l'huile pour former un mélange d'esters d'acides gras oméga-3 et d'antioxydant soluble dans de la graisse ou dans de l'huile ;
e) dosage du mélange obtenu par l'étape d) d'acides gras oméga-3, d'huile végétale et d'antioxydant soluble dans de la graisse ou dans de l'huile dans la solution aqueuse obtenue par l'étape b) qui contient au moins un antioxydant soluble dans l'eau et la protéine végétale qui existe au moins ;
f) homogénéisation du mélange d'esters d'acides gras oméga-3, d'huile végétale et d'antioxydant soluble dans de la graisse ou dans de l'huile d'une part et de la solution aqueuse composée d'au moins un antioxydant soluble dans l'eau et de la protéine végétale qui existe au moins d'autre part pour former l'émulsion.

9. Procédé pour la fabrication d'une émulsion selon la revendication 8, **caractérisé en ce que** l'ajout d'au moins une protéine végétale se fait selon l'étape b) au moyen d'un mélangeur hélicoïdal ou d'un moulin à colloïdes.

10. Procédé pour la fabrication d'une émulsion selon la revendication 8 ou 9, **caractérisé en ce que** l'ajout d'esters d'acides gras oméga-3 dans le mélange d'huile végétale et d'antioxydant soluble dans de la graisse ou dans de l'huile se fait selon l'étape d) dans une atmosphère de protection.

11. Procédé pour la fabrication d'une émulsion selon l'une des revendications 8 à 10, **caractérisé en ce que** le dosage selon l'étape e) se fait par le fait que la solution aqueuse qui forme la phase aqueuse extérieure, qui contient au moins un antioxydant soluble dans l'eau et la protéine végétale qui existe au moins est mise dans une unité de dispersion comme un disperseur à couronne dentée ou un moulin à colloïdes et que le mélange d'esters d'acides gras oméga-3, d'huile végétale et d'antioxydant soluble dans de la graisse ou dans de l'huile qui forme la phase huile intérieure de l'émulsion est ajouté en étant dosé en continu.

12. Procédé pour la fabrication d'une émulsion selon la revendication 11, **caractérisé en ce que**, lors du dosage de la phase huile intérieure dans la phase aqueuse extérieure selon l'étape e), la température du processus est inférieure à 20 °C, en particulier inférieure à 10 °C.

13. Procédé pour la fabrication d'une émulsion selon l'une des revendications 8 à 12, **caractérisé en ce que** l'homogénéisation selon l'étape f) se fait dans un homogénéisateur ou dans un homogénéisateur haute pression.

14. Procédé pour la fabrication d'un gel à partir d'une émulsion fabriquée selon l'une des revendications 8 à 13, **caractérisé en ce que** l'émulsion est réchauffée à une température de 40 à 85 °C pendant une durée de 15 à 240 minutes.

15. Utilisation d'une émulsion ou d'un gel selon l'une des revendications 1 à 7 pour la fabrication d'aliments pour l'homme et/ou l'animal.

16. Utilisation selon la revendication 15, **caractérisée en ce qu'**une masse de départ qui contient de la viande d'au moins un mammifère et/ou au moins un poisson et/ou des constituants d'au moins une plante est au moins partiellement broyée et ensuite mélangée à l'émulsion qui a été finie au préalable ou au gel qui a été fini au préalable.

17. Utilisation selon la revendication 16, **caractérisée en ce que** la teneur de l'émulsion ou du gel dans la masse de départ est dans une plage de plus de 0,0 % en poids à moins de 40 % en poids.

18. Utilisation selon la revendication 17, **caractérisée en ce que** la teneur de l'émulsion ou du gel dans la masse de départ est dans une plage entre 10 % en poids et 25 % en poids.

19. Utilisation selon l'une des revendications 16 à 18, **caractérisée en ce que** la masse de départ est broyée dans un dispositif de broyage de viande comme un hachoir ou un hachoir à viande.

20. Utilisation selon l'une des revendications 16 à 19, **caractérisée en ce que** l'émulsion ou le gel de la mase brute est ajouté(e) à l'état congelé.

21. Utilisation selon l'une des revendications 16 à 20 pour la fabrication de charcuteries, **caractérisée en ce que** la masse de départ est une masse de chair à saucisse.

22. Utilisation selon la revendication 21, **caractérisée en ce que** l'émulsion qui a été finie au préalable ou le gel qui a été fini au préalable est ajouté(e) à la masse de chair à saucisse lorsque substantiellement les 2/3 du temps total de fabrication de chair à saucisse se sont écoulés et est répartie dans la masse de chair à saucisse pendant le 1/3 du temps restant de fabrication de chair à saucisse.

23. Utilisation selon l'une des revendications 16 à 20 pour la fabrication d'aliments à base de viande hachée, **caractérisée en ce que** la masse de départ contient de la viande hachée.
